# EUROPEAN PATENT SPECIFICATION

(11) **EP 3 542 950 B1**
(45) Date of publication and mention of the grant of the patent: **25.11.2020**
(21) Application number: 19163489.8
(22) Date of filing: 18.03.2019
(51) Int. Cl.: B23P 15/00, B23C 3/35, B21D 19/00, B21J 5/02

(54) **AN IMPROVED METHOD AND APPARATUS FOR MACHINING A KEY**
EIN VERBESSERTES VERFAHREN UND GERÄT ZUM BEARBEITEN EINES SCHLÜSSELS
UN PROCÉDÉ ET DISPOSITF AMÉLIORÉ POUR L'USINAGE D'UNE CLÉ

(30) Priority: 19.03.2018 IT 201800003737
(43) Date of publication of application: 25.09.2019
(73) Proprietor: SILCA S.p.A., 31029 Vittorio Veneto (IT)
(72) Inventor: ORTOLAN, Francesco, 31029 VITTORIO VENETO (IT)
(74) Representative: Piovesana, Paolo

(56) References cited:
- WO-A1-03/069185
- CN-A- 105 772 787
- CN-B- 105 500 011
- CN-U- 204 686 143
- DE-A1-102014 100 393
- US-A- 3 625 111
- US-A1- 2016 004 892

## Description

The present invention relates to an improved method for machining a key, in particular a laser or track key, an apparatus for treating the burrs that form on the surface of a key, as well as an improved machine for machining keys provided with such apparatus.

Among the various types of keys, there are those in which the process for defining the encryption on the face of the stem is generally performed using a flute end mill. In particular, among these keys, there are the so-called "laser" or "trace" keys, i.e. those keys in which the encryption, both internal and external, is performed by obtaining, by means of a flute end mill, a groove on one or both the faces of the key blade.

Considering that the surface of the key blade is covered with a layer of nickel (which is a particularly hard metal), it happens that, after having carried out the processing of a few hundred keys, on the cutting edge of the cutter recess/lip is created which, of course, becomes more and more marked as the number of processes performed by the tool itself increases. In essence, the cutter blade can no longer be sharpened.

Therefore, the processing of coding with such a worn tool is no longer precise and causes the formation - in correspondence with the contact area between the surface of the key and the worn groove/lip on the tip of the cutter tool - of a centesimal burr with jagged conformation.

The presence of this burr is somewhat undesirable as it defines a cutting edge and is however unpleasant to the touch.

Furthermore, the presence of this burr causes an increase in the thickness of the key; in particular, it has to be considered that generally, in double track keys, being symmetrical, the machining/encryption is carried out on both faces and, therefore, the burr is formed on both of these surfaces; more in detail, this causes an increase in the overall thickness of the key thus obtained (which is defined by the body of the key and burrs formed in correspondence of the two faces) and, if such thickness results outside of the requested tolerance limit, the key must be discarded.

At present, in order to eliminate these drawbacks due to the presence of the burr which is formed as a result of the inevitable wear of the end mill, a solution has already been proposed which provides for a brushing operation in which, substantially, the burr is removed with a brush. However, this solution is not completely satisfactory because:
- it is not possible to completely eliminate the burr as the latter is particularly hard; moreover, if a harder brush is used, there is the risk of scratching, and therefore ruining, the surface of the key, and
- the brush itself is consumed easily and quickly.

CN105772787, disclosing the preamble of claims 1, 5 and 12, presents a machine for processing keys, which includes an end mill to make one or more slots on at least one face of a key. Furthermore, the same machine has a unit for the removal of the burrs deriving from the processing carried out by means of said end mill. In particular, this burrs removal unit involves the use of a blade, which is rotated by a dedicated motor, and a template mounted on the structure of the machine, which is intended to accommodate the key to be machined.

Object of the present invention is to propose a method and an apparatus which eliminates the aforesaid drawbacks present in the traditional solutions.

Another object of the invention is to propose a method and an apparatus that allow eliminating the effects deriving from the burr that is created during the machining of keys by means of an end mill, in particular to carry out the encryption of laser or traces keys, either single or double, or of punched keys.

Another object of the invention is to propose a method and an apparatus which neutralizes both to a tactile and to a visual level, the presence of any burrs that can result from the machining of keys with an end mill.

Another object of the invention is to propose a method and an apparatus which allow obtaining a high-quality key.

Another object of the invention is to propose a method and an apparatus which allow to obtain a key having a thickness which is suitably within the defined tolerance limit.

Another object of the invention is to propose a method and an apparatus which allow to increase the useful lifetime of the tool used for the processing of key encryption, and in particular of the end mill.

Another object of the invention is to propose a method and an apparatus that allow to reduce the processing costs for the encryption of keys.

Another object of the invention is to propose a method and an apparatus that can be used in an automatic machine for processing keys.

Another object of the invention is to propose a method and an apparatus which are suitable for being inserted and integrated in an industrial and highly automated machine.

Another object of the invention is to propose a method and/or apparatus which are the improved and/or alternative compared to traditional solutions.

Another object of the invention is to propose a method for the treatment of burrs - present on one or both faces of a laser, or track or punched key, following a processing carried out by means of a flute end mill - which can be made in easy way and with low costs.

Another object of the invention is to propose a method for the treatment of burrs - present on one or both faces of a laser, or track or punched key, following a processing carried out by means of a flute end mill - which is simple and quick to carry out.

Another object of the invention is to propose a method for treating burrs, arising from a processing carried out by means of a flute end mill, and present on one or on both sides of a laser, or track or punched key both in correspondence with the edges of said key or in correspondence with a central portion thereof.

Another object of the invention is to propose an apparatus for treating the burrs and/or a machine for processing keys that can be implemented in a simple, rapid manner and with low costs.

Another object of the invention is to propose an apparatus for treating the burrs and/or a machine for processing keys with an alternative characterization, both in functional and implementation terms, compared to the traditional ones.

All these objects and others which will become apparent from the description which follows are achieved, according to the invention, with a method having the characteristics indicated in claim 1, with an apparatus having the characteristics indicated in claim 5, and with a key having the characteristics indicated in claim 15.

The method for the processing of keys according to the present invention, in particular for the processing of keys by means of a flute end mill, comprises the following operations:
- at least one hollow on at least one face of the stem of said key to be machined is obtained by means of a flute end mill,
- a squashing step of the possible burrs deriving from the processing carried out by means of said end mill is carried out, said squashing step provides to push each face of the stem of the key into contact with a flat and uniform surface of a corresponding element, or vice versa, so as to squash any burrs against and on the same face where the burrs are provided.

Conveniently, said at least one hollow formed by machining with a flute end mill is obtained at a central portion of each face of the key (i.e. a portion spaced with respect to the perimeter/outer edge of said face) or is obtained at the perimeter/outer edge of each face of the key.

Advantageously, in the method according to the invention a first element is used which acts with its flat and uniform surface on a first face of the key and a second element acts with its flat and uniform surface on the other face so as to clamp and compress the key blade between said two flat and uniform surfaces of the two elements and thus squash/spread any burrs on the respective faces.

Advantageously, in the method according to the invention, in said step of squashing the burrs, the flat and uniform surface of a first element is pushed against a first face of the key stem, or vice versa, while the opposite face of the stem of the key itself is supported on the flat and uniform surface of a second element so as to press and compress, substantially simultaneously, against and on the respective faces the possible burrs present on at least and deriving from the processing carried out by means of the end mill one of said faces.

Advantageously, in the method according to the invention the entire flat and uniform surface of each element which is intended to come into contact with each face of the key stem has a substantially continuous development, devoid of shaped areas and substantially parallel to the face of the stem of the key.

Advantageously, in the method according to the invention, said squashing step of the possible burrs is carried out immediately after having obtained on both faces of the key blade, by means of the end mill, all the slots that define the encryption of the key itself.

The present invention also relates to an apparatus for treating any burrs which form at least one face of a key following a machining operation, performed by means of a flute end mill to make at least one hollow on said face, said apparatus comprises:
- a first element which presents a flat and uniform surface facing a first face of the stem of said key,
- a second element which presents a flat and uniform surface on which rests the opposite face of the stem of said key,
- moving means said first element and/or said second element to push said flat and uniform surface of the first element against said first face, or vice versa, thus pressing and compressing any burrs against and on the same face in which they are present and/or from which these burrs protrude.

Conveniently, said at least one hollow formed by machining with a flute end mill is obtained at a central portion of each face of the key (i.e. a portion spaced with respect to the perimeter/outer edge of said face) or is obtained at the perimeter/outer edge of each face of the key.

Advantageously, the apparatus comprises:
- a non-operating condition in which the flat and uniform surface of the first element is spaced apart and/or does not act on the first face of the stem of said key, and
- an operating condition in which the flat and uniform surface of the first element is in contact and acts on said first face so as to press and compress the burrs against and on the same face in which said burrs are present and/or from which they protrude.

Preferably, the apparatus comprises a configuration in which said first element is movable while said second element is fixed.

Preferably, the apparatus comprises a configuration in which said second element is movable while said first element is fixed.

Preferably, the apparatus comprises a configuration in which both said first and said second element are movable.

Advantageously, said first element comprises a beating body. Preferably, said beating body is defined by a single piece which is provided with said flat and uniform surface. Preferably, said moving means are configured to strike, at least once, the flat and uniform surface of the beating body against said first face of the key.

Advantageously, said second element comprises a support body on which the key is placed. Preferably, said support body is defined by a single piece which is provided with said flat and uniform surface. Preferably, said moving means are configured to push, at least once, said support body with said key against said first element.

Advantageously, said moving means said first element and/or said second element are configured to cause a translation of the respective flat and uniform surfaces of said first element and/or of said second element along a direction substantially perpendicular to said surfaces.

Advantageously, said first element and/or said second element comprise a hydraulic pressure cylinder. Preferably, said movement means are configured to advance said cylinder in contact with at least one of the faces of the stem of the key having burrs.

Advantageously, said second element, on which said key is intended to rest, is positioned below the first element. Preferably, the flat and uniform surface of the first element has a development which is substantially horizontal. Preferably, the flat and uniform surface of the second element has a development which is substantially horizontal. Preferably, said first element is associated with said movement means configured to cause the downwards movement of its flat and uniform surface from top to bottom.

Conveniently, in the method and/or in the apparatus according to the invention, each element comes into contact with a face of the key by means of its surface which is flat and uniform, i.e. substantially without depressions, reliefs and, generally, protruding or depressed areas. Preferably, the development of the entire surface of the corresponding element, which comes into contact with the face of the key, is substantially continuous. Preferably, the surface, which comes into contact with the face of the key, does not have shaped areas and, in particular, does not have corresponding shaped areas complementary to the slots and/or perimeter edges of the stem of the key with which it is intended to come into contact.

Advantageously, the flat and uniform surface of the corresponding element has an arrangement substantially parallel to the face of the key in which the burrs to be squashed are provided. Preferably, the flat and uniform surface of each element has a substantially horizontal arrangement.

The present invention also relates to a machine for processing keys, preferably for processing aimed at defining the encryption of keys, which comprises in sequence:
- at least one unit for performing the machining process of a key, said unit being provided with means for obtaining, by means of a flute end mill, at least one slot on at least one face of the stem of a key,
- at least one unit for squashing any burrs deriving from the processing carried out in said at least one processing unit, said at least one unit for squashing any burrs being provided with at least one apparatus provided with one or more of the above characteristics.

Advantageously, the machine according to the invention comprises in sequence:
- a first unit for the processing of the encryption of a first face of the stem of a key,
- a second unit for the processing of the encryption of the other face of the key blade,
- said unit for squashing any burrs present on both sides of the stem of said key and deriving from the work carried out by both said units.

Advantageously, the machine further comprises, downstream of said at least one unit for performing the machining of a key and said unit for squashing any burrs, a unit configured to check whether the encryption and squashing operations are been carried out correctly.

Advantageously, the machine comprises a movement device configured to transfer, in sequence, the key being processed between the successive units of the machine itself.

Advantageously, said at least one processing unit, said unit for squashing the burrs, as well as the possible verification unit, are placed side by side. Preferably, said movement device is configured to perform a linear transfer between the successive units of the machine itself.

Advantageously, said at least one processing unit, said unit for squashing the burrs, as well as the possible verification unit, are arranged around the movement device. Preferably, said movement device is configured to perform a rotary transfer between the successive units of the machine itself.

The present invention also relates to a laser, track or punched key obtained by a method according to one or more of the aforesaid characteristics and/or by means of an apparatus according to one or more of the aforesaid characteristics. Preferably, the key according to the invention has, on the external surface of both faces of the stem of said key and/or at the edges of said at least one hollow defining said ciphering and obtained by a machining performed with a flute end mill, portions defined by the squashing, against and on the corresponding face, of the burrs deriving from said processing.

The present invention is hereinafter further clarified in a preferred practical embodiment thereof, given purely for the purpose of example and not of limitation with reference to the drawings, in which:
- Figure 1: schematically shows, according to a vertical section, the processing of the encryption of a key with a substantially new (not worn) tool,
- Figure 2: shows schematically, in a vertical section, the key obtained by a machining performed with the tool of fig. 1
- Figure 3: shows in perspective view the stem of a laser key with the corresponding tool,
- Figure 4: shows in a different perspective view the laser key of fig. 3
- Figure 5: schematically shows, according to a vertical section, the processing of encryption of a key with a worn tool,
- Figure 6: shows schematically, in a vertical section, the key obtained by a machining performed with the tool of fig. 5,
- Figure 7: schematically shows, in a vertical section, a first embodiment of the apparatus according to the invention,
- Figure 8: schematically shows the key obtained with the apparatus according to the invention in a vertical section,
- Figure 9: schematically shows, in a vertical section, a second embodiment of the apparatus according to the invention,
- Figure 10: shows schematically in a vertical section, a third embodiment of the apparatus according to the invention,
- Figure 11: schematically shows, in a vertical section, a fourth embodiment of the apparatus according to the invention,
- Figure 12: schematically shows a first embodiment of the machine for processing keys according to the invention, and
- Figure 13: schematically shows a second embodiment of the machine for processing keys according to the invention.

As can be seen from the figures, according to the traditional technique, to achieve a hollow 5 on one, or on both faces 2' and 2" of the stem 3 of a key 4, a flute end mill 6 is used as a working tool which, suitably, is driven in rotation by a corresponding machine tool (not shown).

Conveniently, the flute end mill 6 allows to obtain on each face 2' or 2" of the stem 3 an elongated and continuous hollow 5, that is a groove 7, which defines the corresponding encryption in the case of so-called laser or trace keys. Conveniently, the groove 7 can be formed inside the respective face (i.e. in a central area 18) and thus have two side containment walls 14, or it can be formed at the perimetral edge 17 of the stem 3 of the key 4 in a manner to present a single lateral containment wall and then open laterally to the outside.

Suitably, the flute end mill 6 also allows to obtain on each face 2' or 2" of the stem 3 a plurality of closed hollows 5 and separated from each other (pockets) that define the corresponding encryption in the case of punched key (not shown).

In particular, the flute end mill 6 comprises a stem 8, for its mounting on the machine tool spindle, and a head 9 in which the cutting sections 10 of the cutter itself are formed.

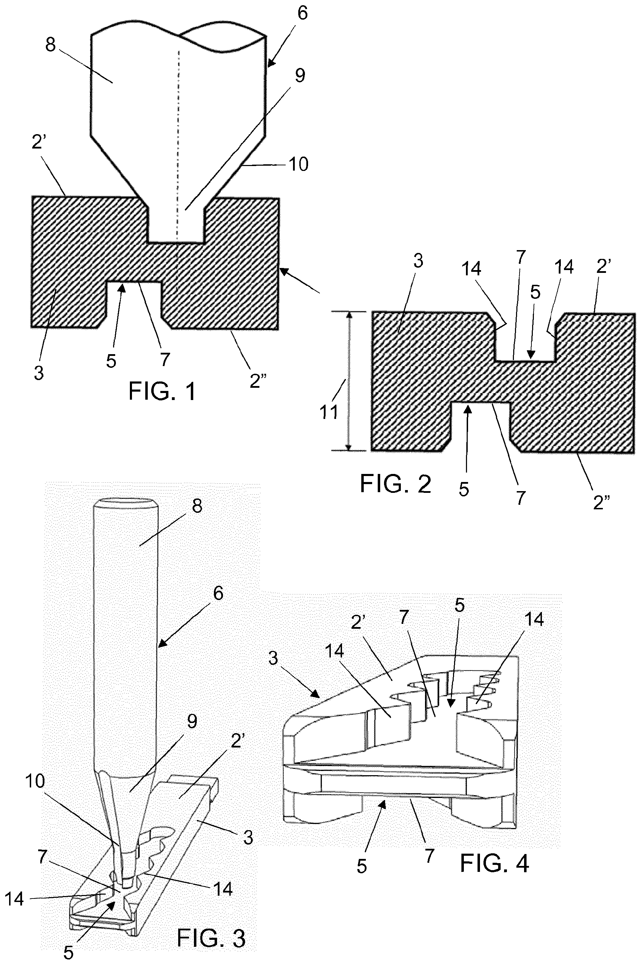

When working a face 2', 2" of the stem 3 of a key 4 by means of a flute end mill 6 that is substantially new or slightly worn - i.e. substantially at the beginning of its useful life, such as for example that of figure 1 - in order to create the hollow 5 on the faces of the key 4, no burrs are formed and, therefore, the thickness 11 of the key itself, so worked (i.e. with the hollow 5), corresponds to the distance between the two opposite faces 2' and 2" of the stem 3 (see fig. 1).

Following a prolonged and intensive use due to the processing of a plurality of keys, the flute end mill 6 - and in particular due to its contact with particularly hard outer surface (which generally but not necessarily is nickel) present on the faces 2' and 2" of the stem 3 of the keys to work - the head 9 of the flute end mill 6 becomes worn and, in particular, the cutting edge 10 becomes dull.

Therefore, the processing of the stem 3 of the key 4 with a flute end mill 6 having the head 9 thus worn causes the creation of burrs 12 in correspondence with the contact areas between the mill itself and the faces 2' and/or 2" on which the hollows 5 are obtained. More in detail, these burrs 12 are constituted by metal curls - of the same material of which the face of the key is made of (i.e., generally nickel) -which remain on the working edge/margin of the hollow 5, in particular at the exit area of the cutter 6.

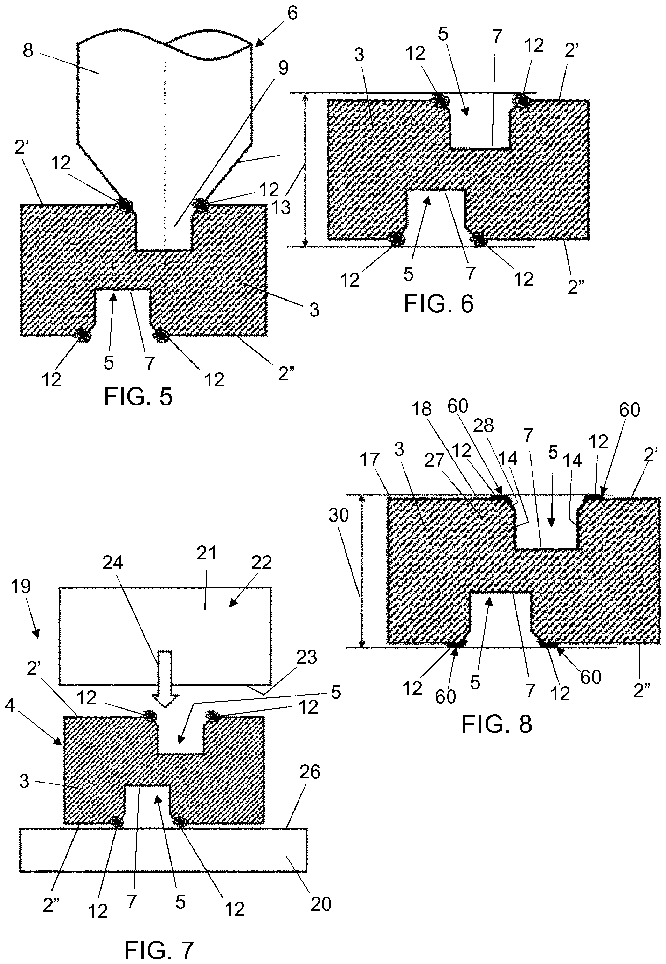

More in detail, when a worn flute end mill 6 is used - such as for example that of Figure 5 - on the faces 2' and/or 2" of the stem 3 of the key 4 burrs 12 are formed and, therefore, the thickness 13 of the key 4 (see fig. 6) is defined not only by the distance between the two opposite faces 2' and 2" of the stem 3 but also by the height of the burrs 12 which protrude from said faces.

In particular, these burrs 12 are formed on the outer surface 27 of one or both of the faces 2', 2" and/or at the outer edges 28 of the containment wall 14 that delimits each hollow 5 or 7. Generally, such a hollow or hollow 5 or 7 is defined in correspondence of the inner area of the face 2' or 2" of the stem 3 but may be defined also in correspondence of one of the peripheral edges 17 of said face.

As shown in Figures 7 to 11, the solution according to the invention provides for performing a squashing step of any burrs 12, resulting from the processing performed by the end mill 6, on the respective side 2' and/or 2" of the stem 3 and on to which there are said burrs. In essence, in the method according to the invention, using a first element 22 acts on a first face 2' of the stem 3 of the key 4 and a second element 20 acting on the other face 2" of the stem 3 of the key 4 in order to clamp and compress the latter and so squash any burrs 12 on the respective faces 2', 2" of the stem itself.

In particular, the solution according to the invention provides for pushing - manually or, preferably, by means of an actuator - the flat and uniform surface 23 of a first element 22 against a first face 2' of the stem 3 of the key 4 (or vice versa), while the opposite face 2" of the stem 3 of the key itself rests on a flat and uniform surface 26 of a second element 20 so as to press and compress, substantially simultaneously, against the respective faces 2', 2" of the stem 3, the possible burrs 12 which are present on at least one of said faces and which derive from the processing carried out by means of the end mill 6. Basically, the solution according to the invention provides to push each face 2' or 2" of the stem 3 of the key 4 into contact with the flat and uniform surface 23 or 26 of a corresponding element 20 or 22 plans, (or vice versa) to push the flat and uniform surface 23 o 26 of each element 20 or 22 in contact with the corresponding face 2' or 2" of the stem 3 of the key 4, so as to squash the eventual burrs 12 against and on the same face 2', 2" in which are the burrs themselves. The method according to the invention provides to carry out the aforesaid step of squashing any burrs 12 after having obtained, by means of the end mill 6, at least one encryption hollow 5 on one or both faces 2', 2" of the stem 3 of the key 4.

Conveniently, as mentioned, said at least one encryption hollow 5 can comprise a single elongated and continuous slot (i.e. a groove 7 which, preferably, is obtained by translating the mill itself along the stem 3) or can comprise a plurality of hollows closed and separated from each other (slots which, preferably, are obtained following the punctual contact of the cutter itself on the stem 3 without any translation or with a minimum translation). Conveniently, said at least one encryption hollow 5 may be formed either inside (i.e. in a central area 18) of a face 2' or 2" of the stem 3 or may be formed at the perimetric edge 17 of said stem of the key 4.

Conveniently, the flat and uniform surfaces 23 or 26 of the corresponding elements 20 and 22 are configured to squash and flatten the burrs 12 which are formed on the outer surface 27 of one or both faces 2', 2" and/or on the outer edge 28 of said at least one encryption hollow 5 following the processing carried out by means of the end mill 6.

Advantageously, the squashing step of any burrs 12 is carried out immediately after having formed on one or both faces 2' or 2" of the stem 3 of the key 4, by means of the end mill 6, all the hollows 5 which define the encryption of the key itself.

Preferably, the squashing step of any burrs 12 is always carried out, i.e. even when the previous processing is carried out by means of a substantially new and/or not worn end mill 6. Alternatively, the squashing step of any burrs 12 is carried out only after the flute end mill 6 has carried out a certain number of operations or when it is found that the cutter itself is worn or, again, when the height and/or the thickness 13 of the burrs 12 on the key 4 are detected to be greater than a certain tolerance value or range.

The solution according to the invention provides for the use of an apparatus for treating the possible burrs 12, indicated as a whole with the reference number 19, comprising:
- a first element 22 which presents a flat and uniform surface 23 facing a first face 2' of the stem 3 of the key 4,
- a second element 20 which presents a flat and uniform surface 26 on which the opposite face 2" of the stem 3 of the key 4 rests,
- means (not shown) for moving said first element 22 and/or said second element 20 so as to push the flat and uniform surface 23 of the first element 22 against said first face 2', or vice versa, thus pressing and compressing any burrs 12 against the respective face 2' or 2" of the stem 3 on which these burrs are present and/or protrude from.

Conveniently, each element 20 or 22 comes into contact with the face 2' or 2" of the key 4 through its surface 23 or 26 which is flat and uniform, i.e. it is substantially free of depressions, reliefs and, in general, of protruding or depressed areas. Preferably, the development of the entire surface 23 or 26 of the corresponding element 20 or 22 which comes into contact with the face 2' or 2" of the key 4 is substantially continuous.

Preferably, the surface 23 or 26 which comes into contact with the face 2' or 2" of the key 4 does not have shaped areas and, in particular, does not have corresponding shaped areas complementary to the hollows 5 and/or the perimetral edges 17 of the stem 3 of the key 4 with which it is intended to come into contact.

Advantageously, the flat and uniform surface 23 or 26 of the corresponding element 20 and 22 has an arrangement substantially parallel to the face 2' or 2" of the key 4 in which the burrs 12 to be squashed are provided. Preferably, the flat and uniform surface 23 or 26 of the corresponding element 20 and 22 has a substantially horizontal arrangement.

Advantageously, the two elements 20 and 22 are realized in a single piece and the realization of the respective surfaces 23 or 26 which come into contact with the face 2' or 2" of the key 4, being flat and uniform, do not require any particular surface processing. Conveniently, in this way, the realization of the elements 20 and 22, provided in the method and/or in the apparatus 19 according to the invention, is extremely simple and inexpensive.

Conveniently, moreover, in the method and/or in the apparatus 19 according to the invention, the fact that the faces 2' or 2" of the key 4 come into contact with flat and uniform surfaces 23 or 26 of the elements 20, 22 allows to use the same elements for squashing the burrs 12 provided in any type of key that has been worked using a flute end mill 6. In other words, it is not necessary to change the elements 20 or 22 depending on the type and/or size of the key 4 to be treated or depending on the location and/or characteristic of the hollow 5 made on the stem 3 of the key 4.

Advantageously, the moving means of said first element 22 and/or said second element 20 comprise an actuator device (not shown), such as a motor, which preferably is controlled manually or automatically.

Conveniently, the moving means of said first element 22 and/or said second element 20 are configured to cause a translation of the respective flat and uniform surfaces 23 and 26 along a direction substantially perpendicular to said surfaces and, preferably, perpendicular also to the faces 2', 2" of the stem 3.

In particular, the apparatus 19 includes a non-operating position/condition - in which the first element 22 is not in contact (and is spaced) and/or is not acting on the first face 2' of the stem 3 of said key - and an operative position/condition - in which the flat and uniform surface 23 of the first element 22 is in contact and acting on said first face 2' of the stem 3 so as to press and compress the burrs 12 present on the outer surface 27 of one or both faces and 2', 2" and/or on the edge of the outer 28 of the lateral walls of the 14 that delimit the hollow 5. Suitably, said outer edge 28 may be slightly bevelled, or it can also be a sharp edge.

Basically, in the operating position/condition of the apparatus 19, the key 4, and in particular the faces 2', 2" of its stem 3, are not squashed between the flat and uniform surfaces 23 and 25 respectively of the first 22 and of the second 20 element, so that the burrs 12 are substantially "spread" on said faces.

Advantageously, in this way, the height and the bulk of the burrs 12 protruding from the faces 2', 2" of the stem 3 are reduced, thus obtaining a key 4 in which the final total thickness 30 (i.e. after 'squashing operation') is lower than the initial thickness 13 (that is, before squashing but after the ciphering operation using the end mill 6).

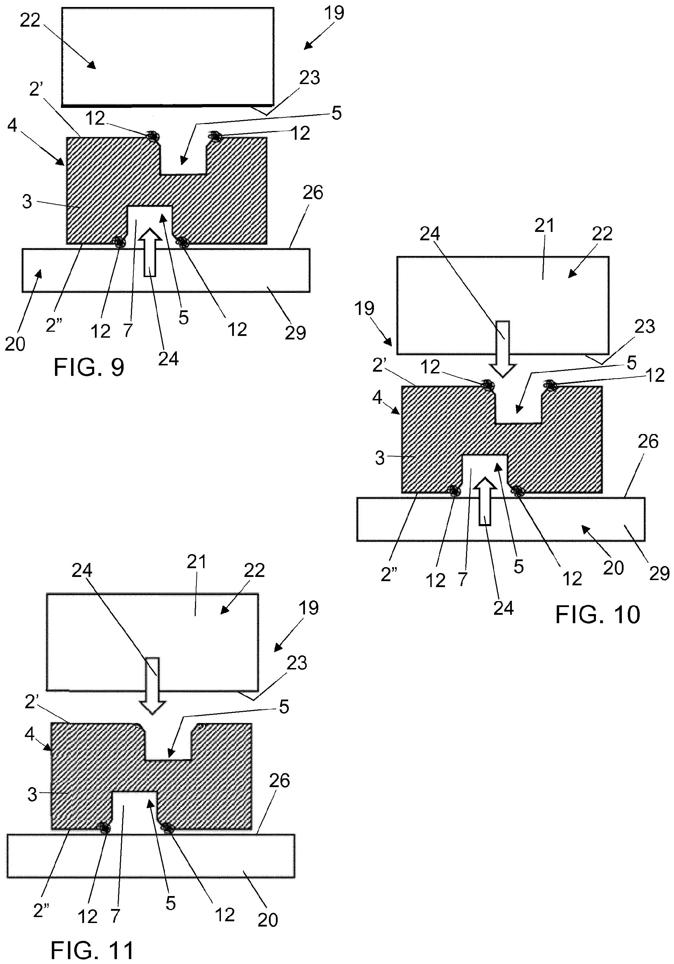

Suitably, the flat and uniform surface 23 of the first element 22 comes into contact and acts directly on the burrs 12 provided on the first face 2' of the 3 stem (i.e. that facing to said first element 22) so as to press them and compress them against such face; further or alternatively, the first element 22, pushing the stem 3 of the key 4 against the flat and uniform surface 26 of the second element 20, acts indirectly on the burrs 12 provided on the opposite face 2" so as to press them and compress them against this latter face (see fig. 11).

Conveniently, in the apparatus 19 according to the invention, the first element 22 is movable while the second element 20 is fixed (see fig. 7), or the first element 22 is fixed while the second element 20 is movable (see fig. 9), or both elements 20 and 22 are mobile in mutual approach/departure (see fig. 10).

Suitably, as shown in Figure 7 and 10, the first element 22 comprising a swing body 21 which is defined by a single piece. In this case, the movement means are configured to strike, at least once, the beating body 21 against said first face 2' of the stem 3 of the key 4.

Conveniently, the percussion force 24 of the beating body 21 is sufficient to press and compress the burrs 12 against the corresponding face 2', 2" of the key 4 so as to reduce their thickness and bulk.

Conveniently, the stroke end of the impact movement of the beating body 21 is defined by the contrast of the body itself with the corresponding face 2' of the key 4.

Preferably, the surface 23 of the beating body 21, which strikes and comes into contact with the burrs 12, is substantially flat and uniform.

Conveniently, the flat and uniform surface 23 of the beating body 21 is substantially facing and parallel to the face 2' on which it acts and with which it is intended to come into contact. Preferably, the flat and uniform surface 23 of the striking body 21 has a continuous horizontal extension.

Conveniently, the second element 20 comprises a support body 29 which is defined by a single piece and on which the key 4 rests. Preferably, the support body 29 comprises a flat and uniform surface 26 at the area on which it is supported the face 2" of the key 4. Conveniently, the flat and uniform surface 26 of the support body 29 is substantially facing and parallel to the face 2" on which it acts and with which it is intended to come into contact. Preferably, the flat and uniform surface 26 of the support body 29 has a continuous horizontal extension.

Conveniently, the key 4 is always resting on the flat and uniform surface 26 of the second element 20, i.e. both during the non-operating condition and during the operating condition of the apparatus 19, as well as before the impact of the other face 2' of the key 4 with the flat and uniform surface 23 of the first element 22.

Advantageously, as shown in figures 9 and 10, the support body 29 can be movable and, for this purpose, the movement means are configured to push, at least once, said support body 29, with the respective key 4, against the flat and uniform surface 23 of the first element 22.

Advantageously, as shown in Figure 7, the second element 20, on which face 2" of the key 4 always rests, is positioned inferiorly relative to the first element 22 which is movable and, preferably, is moved in such a way as to have a downward thrust stroke, from top to bottom.

Advantageously, as shown in Figure 9, the second element 20, on which the face 2" of the key 4 always remains, is positioned below the first element 22 and the second element 20 itself is movable and, preferably, is moved so as to have an upward thrust stroke, from bottom to top.

The present invention also relates to the laser, track or punched key 4, which is obtained by a method and/or an apparatus as, described above. In particular, the present invention also relates to the laser track 4 or track or punched key (see fig. 8) which has - on the outer surface 27 of one or both faces 2', 2" of its stem 3 and/or at the edges 28 of said at least one hollow 5, 7 defining said encryption and obtained by means of a machining performed with a flute end mill 6 - portions 60 which are defined by squashing, against and on the corresponding face 2' or 2" , of the burrs 12 deriving from said processing.

Conveniently, the method and the apparatus according to the invention can be implemented inside a machine 40, such as that illustrated in Figures 9 and 10, for machining keys, preferably for processing aimed at defining the encryption of these keys.

In particular, the machine 40 comprises:
- a unit 41 for the encryption processing of a first face 2' of the stem 3 of a key 4,
- a unit 42 for the encryption processing of the other face 2" of the stem 3 of the key 4,
- a unit 43 for the squashing of any burrs 12.

More in detail, the unit 41 and/or 42 for the machining of the faces 2' and 2" of the stem 3 of the key 4 comprise a machine tool - preferably but not necessarily the same for both units - for rotating of a flute end mill 6. Conveniently, the machine tool is controlled so as to obtain on each side 2', 2" one or more hollows 5, which - according to the groove profile obtained and/or to their depth and/or position - define the encryption of the key itself.

The unit 43 for squashing the burrs 12 comprises an apparatus 19 for treating the burrs as described above, both in its essential and preferential characteristics.

Advantageously, in the machine 40 the units 41, 42 and 43 are arranged in sequence.

Preferably, the machine 40 is of industrial type and, suitably, may include a plurality of units 41, 42 and 43.

Preferably, the machine 40 also comprises, downstream of the unit 43 for squashing the burr, a unit 44 provided with traditional sensors and configured to check whether the encrypting and squashing operations have been carried out properly. Conveniently, the control unit 44 is also configured so that, in the event of a negative result of the verification, the key 4 is rejected.

Conveniently, it is understood that, in the case of machining/encryption on only one face of the key's stem 3, the machine 40 comprises only one of the units 41 or 42 or, if both are present, only one of the two units can be activated.

Advantageously, the machine 40 comprises a movement device 50 configured to transfer, in sequence, the key being processed between the successive units of the machine itself.

Preferably, the movement device 41 is provided with clamping members 51 (for example a clamp) of the head 49 of the key 4 being processed.

In particular, the handling device 50 can comprise a slide 53 which is provided with means for its controlled movement along a guide and on which said clamping members 51 are mounted, which are in turn provided with means for their approaching and removing from the operative/work area provided in each unit. More in detail, in this way, the gripping organs 51 of the head 49 of the key 4 being machined can be moved along the two directions X, Z of a Cartesian plane substantially horizontal and coplanar with respect to the operating/working areas provided in each unit.

Conveniently, the handling device 50 is of the robotized type and can comprise for example a manipulator traditionally used in the field of industrial automation.

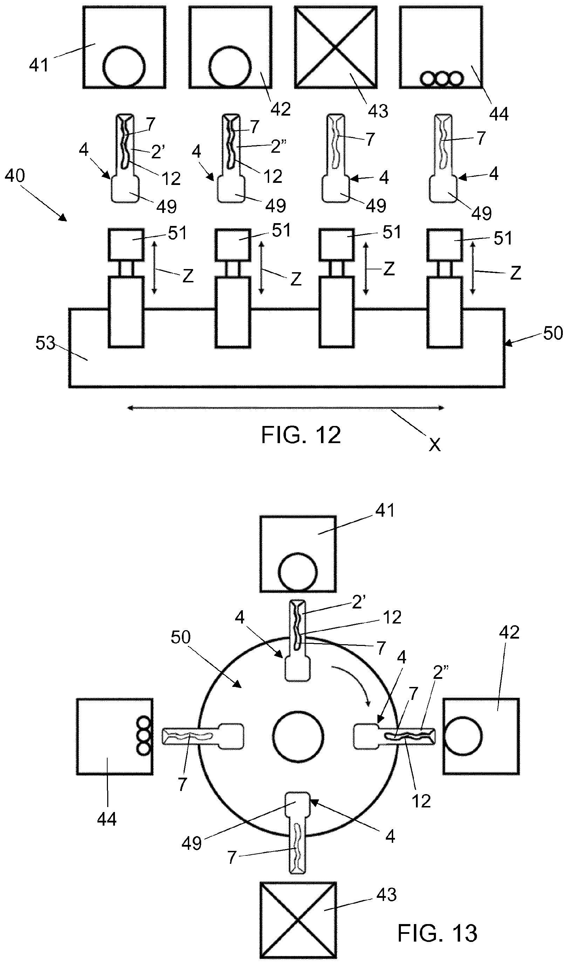

Preferably, as illustrated in the embodiment of Figure 12, the processing/encryption units 41 and/or 42, as well as the possible control unit 44, are laterally placed side by side both with each other and with the unit 43 for squashing the burr 12.

Conveniently, the handling device 50 can be configured to perform a linear transfer, as shown in Figure 12, both in a first lateral direction X between the successive units of the machine 40 and in a second direction Z (which is perpendicular to the first direction X) to bring, within each unit, the key 4 in the corresponding operating/working area.

Advantageously, in the embodiment illustrated in Figure 13, the processing/encryption units 41 and/or 42 and the unit 43 for squashing the burrs 12, as well as the eventual control unit 44, are arranged around the movement device 50.

Conveniently, the handling device 50 can be configured to perform a rotary transfer, as shown in Figure 13, to carry the key 4, which is being processed, in the operative/work areas of the successive units provided in the machine 40.

Suitably, it is understood that the machine 40 is provided with a control unit (not shown) - implemented for example through a traditional processor used in automation industry - which is configured for controlling the operation of the entire machine 40 and, in particular, for controlling and synchronizing the operation of the equipment provided in the various units, as well as of the handling device 50.

From the aforegoing it is apparent that the method, the apparatus and the machine according to the invention are more advantageous with respect to the traditional solutions in that:
- increases the useful life of the end mill as the effects resulting from wear of the cutter itself are rendered substantially null on the finished key and, suitably, this allows to reduce encryption/machining costs of the finished keys,
- the burrs that are created due to the inevitable wear of the end mill are no longer perceptible to the touch, not visually noticeable and, moreover, do not affect the thickness tolerance of the ciphered key; in particular, this allows to increase the quality of the finished key thus obtained,
- it is of easy and fast implementation,
- it is suitable for use in production line and in highly automated applications and, in particular, at an industrial level,
- they can be used with keys of any type and size without requiring any particular preparation or adaptation operation,
- they are simple, fast and inexpensive to make and use.

## Claims

1. Method for the processing of keys (4), in particular for the encryption of said keys by means of a flute end mill (6), wherein it is obtained by means of a flute end mill (6) at least one hollow (5, 7) on an at least one face (2', 2") of the stem (3) of said key (4) to be processed, and **characterized in that**:
- a squashing step is carried out of any burrs (12) deriving from the processing carried out by means of said flute end mill (6), said squashing step provides to push each face (2', 2") of the stem (3) of the key (4) in contact with a flat and uniform surface (23, 26) of a corresponding element (20, 22), or vice versa, so as to flatten any burrs (12) against and on the same face (2', 2") in which the burrs themselves are provided.

2. Method according to claim 1, **characterized in that** a first element (22) is used which acts with its flat and uniform surface (23) on the entire first face (2') of the key (4) and a second element (20) acting with its flat and uniform surface (26) on the entire other face (2") so as to clamp and compress the stem (3) of the key between said two uniform and flat surfaces (23, 26), thus squashing/spreading any burrs (12) on the respective faces (2', 2").

3. Method according to one or more of the preceding claims, **characterized in that**, in said step of squashing the burrs (12), the flat and uniform surface (23) of a first element (22) is pushed against a first face (2') of the stem (3) of the key (4), or vice versa, while the opposite face (2") of the stem (3) of the key itself rests on the flat and uniform surface (26) of a second element (20) so to press and compress, substantially simultaneously, against and on the respective faces (2', 2") the possible burrs (12) present on at least one of said faces and deriving from the processing carried out by means of the flute end mill (6).

4. Method according to one or more of the preceding claims, **characterized in that** the entire flat and uniform surface (23, 26) of each element (20, 22) which is intended to come into contact with each face (2', 2") of the stem (3) of the key (4) has a substantially continuous development, devoid of shaped areas and is substantially parallel to the face (2', 2") of the stem (3) of the key (4).

5. Apparatus (19) for treating any burrs (12) which are formed in correspondence of at least one face (2', 2") of a key (4) following a processing, carried out by means of a flute end mill (6), to obtain at least one hollow (5, 7) on said face, **characterized in that** it comprises:
- a first element (22) which has a flat and uniform surface (23) facing a first face (2') of the stem (3) of said key (4),
- a second element (20) which has a corresponding flat and uniform surface (26) on which rests the opposite face (2") of the stem (3) of said key (4),
- means for moving said first element (22) and/or said second element (20) so as to push said flat and uniform surface (23) of the first element (22) against said first face (2'), or vice versa, by pressing and thus compressing any burrs (12) against and on the same face (2', 2") in which these burrs are present and/or protrude from.

6. Apparatus according to the previous claim, **characterized in that** it comprises:
- a non-operative condition in which the flat and uniform surface (23) of the first element (22) is spaced apart and/or does not act on the first face (2') of the stem (3) of said key, and
- an operating condition in which the flat and uniform surface (23) of the first element (22) is in contact and acts on said first face (2') so as to press and compress the burrs (12) against and on the same face (2', 2") in which said burrs are present and/or protrude from.

7. Apparatus according to one or more of the preceding claims, **characterized in that** it comprises one of the following configurations:
- said first element (22) is movable while said second element (20) is fixed, or
- said second element (20) is movable while said first element (22) is fixed, or
- both said first (22) and said second element (20) are movable.

8. Apparatus according to one or more of the preceding claims, **characterized in that** said first element (22) comprises a beating body (21) which is defined by a single piece and which is provided with said flat and uniform surface (23) and **in that** said movement means are configured to strike, at least once, the flat and uniform surface (23) of the beating body (21) against said first face (2') of the key (4).

9. Apparatus according to one or more of the preceding claims, **characterized in that** said second element (20) comprises a support body (29) on which the key (4) rests, said support body (29) is defined by a single piece and is provided with said flat and uniform surface (26) on which rests the opposite face (2") of the stem (3) of said key (4).

10. Apparatus according to one or more of the preceding claims, **characterized in that** said moving means for said first element (22) and/or said second element (20) are configured to cause a translation of the respective flat and uniform surfaces (23, 26) of said first element (22) and/or of said second element (20) along a direction substantially perpendicular to said surfaces (23, 26).

11. Apparatus according to one or more of the preceding claims, **characterized in that**:
- the flat and uniform surface (23) of the first element (22) has a development which is substantially horizontal,
- the flat and uniform surface (26) of the second element (20) has a development which is substantially horizontal,
- the second element (20), on which said key (4) is intended to be rested, is positioned below with respect to said first element (22),
- said first element (22) is associated with said movement means configured to cause the movement of its flat and uniform surface (23) from top to bottom.

12. Machine for processing keys, preferably for processing aimed at defining key encryption (4), **characterized in that** it comprises in sequence:
- at least one unit (41, 42) for performing the encryption process of a key (4), said unit being provided with means for obtaining by means of a flute end mill (6) at least one hollow (5) on at least one face (2', 2") of the stem (3) of a key (4),
- at least one unit (43) for squashing any burrs (12) deriving from the processing carried out in said at least one processing unit (41, 42), said at least one unit for squashing any burrs (12) being provided with at least an apparatus according to one or more of the claims 5-11.

13. Machine according to the previous claim, **characterized in that** it also comprises, downstream of said at least one unit for performing the key-cutting processing of a key (4) and said unit (43) for squashing any burrs (12), a unit (44) configured to check whether the encryption and squashing operations have been performed correctly.

14. Machine according to claims 12 or 13, **characterized in that** said at least one processing unit (41, 42), said unit (43) for squashing the burrs, as well as the possible checking unit (44), are side by side and **in that** it comprises a moving device (50) which is configured to perform a linear or rotary transfer of the key to be processed between the successive units of the machine itself.

15. Laser key (4) or track key or punch key **characterized in that** it is obtained by a method according to one or more of claims 1 to 4 and by means of an apparatus according to one or more of claims 5 to 11 and **in that** it presents, on the external surface (27) of both faces (2', 2") of the stem (3) of said key (4) and/or at the edges (28) of said at least one hollow (5, 7) defining said encryption and obtained by a process carried out with a flute end mill (6), portions (60) which are defined by squashing the burrs (12), resulting from said processing, against and on the corresponding face (2', 2") of the stem (3) of said key (4) .

## Patentansprüche

1. Verfahren zum Bearbeiten von Schlüsseln (4), insbesondere zur Codierung von Schlüsseln mittels eines Schaftfräsers (6), wobei mittels eines Schaftfräsers (6) mindestens eine Mulde (5, 7) an mindestens einer Fläche (2', 2") des Schafts (3) des zu bearbeitenden Schlüssels (4) erhalten wird, und **dadurch gekennzeichnet, dass**:
- ein Quetschschritt für Grate (12), die von dem mittels des Schaftfräsers (6) ausgeführten Bearbeiten stammen, ausgeführt wird, wobei der Quetschschritt ein Drücken jeder Fläche (2', 2") des Schafts (3) des Schlüssels (4) in Kontakt mit einer flachen und gleichförmigen Oberfläche (23, 26) eines entsprechenden Elements (20, 22) oder umgekehrt vorsieht, um Grate (12) gegen die und an derselben Fläche (2', 2"), an der die Grate selbst vorgesehen sind, abzuflachen.

2. Verfahren nach Anspruch 1, **dadurch gekennzeichnet, dass** ein erstes Element (22), das mit seiner flachen und gleichförmigen Oberfläche (23) auf die gesamte erste Fläche (2') des Schlüssels (4) wirkt, und ein zweites Element (20), das mit seiner flachen und gleichförmigen Oberfläche (26) auf die gesamte andere Fläche (2") wirkt, verwendet wird, um den Schaft (3) des Schlüssels zwischen den zwei gleichförmigen und flachen Oberflächen (23, 26) einzuklemmen und zusammenzudrücken, wodurch Grate (12) an den jeweiligen Flächen (2', 2") gequetscht und ausgebreitet werden.

3. Verfahren nach einem oder mehreren der vorhergehenden Ansprüche, **dadurch gekennzeichnet, dass**, in dem Schritt des Quetschens der Grate (12), die flache und gleichförmige Oberfläche (23) eines ersten Elements (22) gegen eine erste Fläche (2') des Schafts (3) des Schlüssels (4) gedrückt wird oder umgekehrt, während die gegenüberliegende Fläche (2") des Schafts (3) des Schlüssels selbst auf der flachen und gleichförmigen Oberfläche (26) eines zweiten Elements (20) aufliegt, um, im Wesentlichen gleichzeitig, gegen die und an den jeweiligen Flächen (2', 2") der möglichen Grate (12), die an mindestens einer der Flächen vorhanden sind und von dem mittels des Schaftfräsers (6) ausgeführten Bearbeiten stammen, zu drücken und diese zusammenzudrücken.

4. Verfahren nach einem oder mehreren der vorhergehenden Ansprüche, **dadurch gekennzeichnet, dass** die gesamte flache und gleichförmige Oberfläche (23, 26) jedes Elements (20, 22), das mit jeder Fläche (2', 2") des Schafts (3) des Schlüssels (4) in Kontakt treten soll, eine im Wesentlichen kontinuierliche Entwicklung aufweist, die frei von geformten Bereichen ist und im Wesentlichen parallel zu der Fläche (2', 2") des Schafts (3) des Schlüssels (4) ist.

5. Gerät (19) zum Behandeln von Graten (12), die in Übereinstimmung mit mindestens einer Fläche (2', 2") eines Schlüssels (4) nach einem Bearbeiten, das mittels eines Schaftfräsers (6) ausgeführt wird, um mindestens eine Mulde (5, 7) an der Fläche zu erhalten, gebildet werden, **dadurch gekennzeichnet, dass** es umfasst:
- ein erstes Element (22), das eine flache und gleichförmige Oberfläche (23) aufweist, die einer ersten Fläche (2') des Schafts (3) des Schlüssels (4) zugewandt ist,
- ein zweites Element (20), das eine entsprechende flache und gleichförmige Oberfläche (26) aufweist, auf der die gegenüberliegende Fläche (2") des Schafts (3) des Schlüssels (4) aufliegt,
- ein Mittel zum Bewegen des ersten Elements (22) und/oder des zweiten Elements (20), um die flache und gleichförmige Oberfläche (23) des ersten Elements (22) gegen die erste Fläche (2') zu drücken oder umgekehrt, indem Grate (12) gegen und an dieselbe Fläche (2', 2"), an der diese Grate vorhanden sind und/oder vorstehen, gedrückt und somit zusammengedrückt werden.

6. Gerät nach dem vorhergehenden Anspruch, **dadurch gekennzeichnet, dass** es umfasst:
- einen Nichtbetriebszustand, in dem die flache und gleichförmige Oberfläche (23) des ersten Elements (22) von der ersten Fläche (2') des Schafts (3) des Schlüssels beabstandet ist und/oder nicht auf diese wirkt, und
- einen Betriebszustand, in dem die flache und gleichförmige Oberfläche (23) des ersten Elements (22) mit der ersten Fläche (2') in Kontakt ist und auf diese wirkt, um die Grate (12) gegen und an dieselbe Fläche (2', 2"), an der diese Grate vorhanden sind und/oder vorstehen, zu drücken und somit zusammenzudrücken.

7. Gerät nach einem oder mehreren der vorhergehenden Ansprüche, **dadurch gekennzeichnet, dass** es eine der folgenden Konfigurationen umfasst:
- das erste Element (22) ist bewegbar, während das zweite Element (20) fest ist, oder
- das zweite Element (20) ist bewegbar, während das erste Element (22) fest ist, oder
- sowohl das erste (22) als auch das zweite Element (20) ist bewegbar.

8. Gerät nach einem oder mehreren der vorhergehenden Ansprüche, **dadurch gekennzeichnet, dass** das erste Element (22) einen Schlagkörper (21) umfasst, der durch ein einzelnes Stück definiert ist und der mit der flachen und gleichförmigen Oberfläche (23) versehen ist, und dadurch, dass das Bewegungsmittel dazu ausgelegt ist, mindestens einmal, die flache und gleichförmige Oberfläche (23) des Schlagkörpers (21) gegen die erste Fläche (2') des Schlüssels (4) zu schlagen.

9. Gerät nach einem oder mehreren der vorhergehenden Ansprüche, **dadurch gekennzeichnet, dass** das zweite Element (20) einen Stützkörper (29) umfasst, auf dem der Schlüssel (4) aufliegt, wobei der Stützkörper (29) durch ein einzelnes Stück definiert ist und mit der flachen und gleichförmigen Oberfläche (26), auf der die gegenüberliegende Fläche (2") des Schafts (3) des Schlüssels (4) aufliegt, versehen ist.

10. Gerät nach einem oder mehreren der vorhergehenden Ansprüche, **dadurch gekennzeichnet, dass** das Bewegungsmittel für das erste Element (22) und/oder das zweite Element (20) dazu ausgelegt ist, eine Translation der jeweiligen flachen und gleichförmigen Oberflächen (23, 26) des ersten Elements (22) und/oder des zweiten Elements (20) entlang einer Richtung im Wesentlichen senkrecht zu den Oberflächen (23, 26) zu bewirken.

11. Gerät nach einem oder mehreren der vorhergehenden Ansprüche, **dadurch gekennzeichnet, dass**:
- die flache und gleichförmige Oberfläche (23) des ersten Elements (22) eine Entwicklung aufweist, die im Wesentlichen horizontal ist,
- die flache und gleichförmige Oberfläche (26) des zweiten Elements (20) eine Entwicklung aufweist, die im Wesentlichen horizontal ist,
- das zweite Element (20), auf dem der Schlüssel (4) aufliegen soll, in Bezug auf das erste Element (22) unterhalb angeordnet ist,
- das erste Element (22) mit dem Bewegungsmittel verbunden ist, das dazu ausgelegt ist, die Bewegung seiner flachen und gleichförmigen Oberfläche (23) von oben nach unten zu bewirken.

12. Maschine zum Bearbeiten von Schlüsseln, vorzugsweise zu einem Bearbeiten, das auf das Definieren einer Schlüsselcodierung (4) gerichtet ist, **dadurch gekennzeichnet, dass** sie der Reihe nach umfasst:
- mindestens eine Einheit (41, 42) zum Durchführen des Codierungsprozesses eines Schlüssels (4), wobei die Einheit mit einem Mittel zum Erhalten mittels eines Schaftfräsers (6) von mindestens einer Mulde (5) an mindestens einer Fläche (2', 2") des Schafts (3) eines Schlüssels (4) versehen ist,
- mindestens eine Einheit (43) zum Quetschen von Graten (12), die von dem in der mindestens einen Bearbeitungseinheit (41, 42) ausgeführten Bearbeiten stammen, wobei die mindestens eine Einheit zum Quetschen von Graten (12) mit mindestens einem Gerät nach einem oder mehreren der Ansprüche 5-11 versehen ist.

13. Maschine nach dem vorhergehenden Anspruch, **dadurch gekennzeichnet, dass** sie außerdem, nach der mindestens einen Einheit zum Durchführen des Schlüsselschneidebearbeitens eines Schlüssels (4) und der Einheit (43) zum Quetschen von Graten (12), eine Einheit (44) umfasst, die dazu ausgelegt ist, zu überprüfen, ob die Codier- und Quetschvorgänge korrekt durchgeführt wurden.

14. Maschine nach Anspruch 12 oder 13, **dadurch gekennzeichnet, dass** die mindestens eine Bearbeitungseinheit (41, 42), die Einheit (43) zum Quetschen der Grate und die mögliche Überprüfungseinheit (44) Seite an Seite sind, und dadurch, dass sie eine Bewegungsvorrichtung (50) umfasst, die dazu ausgelegt ist, eine lineare oder rotierende Weiterleitung des zu bearbeitenden Schlüssels zwischen den aufeinanderfolgenden Einheiten der Maschine selbst durchzuführen.

15. Laserschlüssel (4) oder Bahnenschlüssel oder Stanzschlüssel, **dadurch gekennzeichnet, dass** er durch ein Verfahren nach einem oder mehreren der Ansprüche 1 bis 4 und mittels eines Geräts nach einem oder mehreren der Ansprüche 5 bis 11 erhalten wird, und dadurch, dass er, an der Außenoberfläche (27) beider Flächen (2', 2") des Schafts (3) des Schlüssels (4) und/oder an den Kanten (28) der mindestens einen Mulde (5, 7), die die Codierung definiert und durch einen Prozess erhalten wird, der mit einem Schaftfräser (6) ausgeführt wird, Abschnitte (60) aufweist, die durch Quetschen der von dem Bearbeiten stammenden Grate (12) gegen und an die entsprechende Fläche (2', 2") des Schafts (3) des Schlüssels (4) definiert werden.

## Revendications

1. Procédé de traitement de clés (4), en particulier pour le cryptage desdites clés au moyen d'une fraise à flûte (6), ou au moins un creux (5, 7) est obtenu sur une au moins une face (2', 2") de la tige (3) de ladite clé (4) à traiter, au moyen d'une fraise à flûte (6) **caractérisé en ce que** :
- on effectue une étape d'écrasement d'éventuelles bavures (12) issues du traitement effectué au moyen de ladite fraise à flûte (6), ladite étape d'écrasement prévoit de pousser chaque face (2', 2") de la tige (3) de la clé (4) en contact avec une surface plane et uniforme (23, 26) d'un élément correspondant (20, 22), ou vice versa, de manière à aplatir d'éventuelles bavures (12) contre et sur la même face (2', 2") dans lesquels les bavures elles-mêmes sont fournies.

2. Procédé selon la revendication 1, **caractérisé en ce qu'**on utilise un premier élément (22) qui agit avec sa surface plane et uniforme (23) sur toute la première face (2') de la clé (4) et un deuxième élément (20) agissant avec sa surface plane et uniforme (26) sur toute l'autre face (2") de manière à serrer et comprimer la tige (3) de la clé entre lesdites deux surfaces uniformes et planes (23, 26), ainsi écraser/étendre les bavures (12) sur les faces respectives (2', 2").

3. Procédé selon une ou plusieurs des revendications précédentes, **caractérisé en ce que**, dans ladite étape d'écrasement des bavures (12), la surface plane et uniforme (23) d'un premier élément (22) est poussée contre une première face (2') de la tige (3) de la clé (4), ou vice versa, tandis que la face opposée (2") de la tige (3) de la clé elle-même repose sur la surface plane et uniforme (26) d'un deuxième élément (20) pour presser et comprimer, substantiellement simultanément, contre et sur les faces respectives (2', 2") les éventuelles bavures (12) présentes sur au moins une desdites faces et issues du traitement effectué au moyen de la fraise a flûte(6).

4. Procédé selon une ou plusieurs des revendications précédentes, **caractérisé en ce que** toute la surface plane et uniforme (23, 26) de chaque élément (20, 22) qui est destinée à venir en contact avec chaque face (2', 2") de la tige (3) de la clé (4) présente un développement substantiellement continu, dépourvu de zones de forme et est substantiellement parallèle à la face (2', 2") de la tige (3) de la clé (4).

5. Appareil (19) pour traiter d'éventuelles bavures (12) qui sont formées en correspondance d'au moins une face (2', 2") d'une clé (4) à la suite d'un traitement, effectué au moyen d'une extrémité de flûte a flûte (6), pour obtenir au moins un creux (5, 7) sur ladite face, **caractérisé en ce qu'**il comprend:
- un premier élément (22) qui présente une surface plane et uniforme (23) en regard d'une première face (2') de la tige (3) de ladite clé (4),
- un deuxième élément (20) qui présente une surface correspondante plane et uniforme (26) sur laquelle repose la face opposée (2"") de la tige (3) de ladite clé (4),
- des moyens pour déplacer ledit premier élément (22) et/ou ledit deuxième élément (20) de manière à pousser ladite surface plane et uniforme (23) du premier élément (22) contre ladite première face (2'), ou vice versa , en pressant et donc en comprimant d'éventuelles bavures (12) contre et sur la même face (2', 2") dans laquelle ces bavures sont présentes et/ou dépassent.

6. Appareil selon la revendication précédente, **caractérisé en ce qu'**il comprend:
- une condition non opérationnelle dans laquelle la surface plane et uniforme (23) du premier élément (22) est espacée et/ou n'agit pas sur la première face (2') de la tige (3) de ladite clé, et
- une condition de fonctionnement dans laquelle la surface plane et uniforme (23) du premier élément (22) est en contact et agit sur ladite première face (2') de manière à presser et comprimer les bavures (12) contre et sur celle-ci face (2', 2") dans laquelle lesdites bavures sont présentes et/ou font saillie.

7. Appareil selon une ou plusieurs des revendications précédentes, **caractérisé en ce qu'**il comprend l'une des configurations suivantes:
- ledit premier élément (22) est mobile tandis que ledit deuxième élément (20) est fixe, ou
- ledit deuxième élément (20) est mobile tandis que ledit premier élément (22) est fixe, ou
- à la fois ledit premier (22) et ledit deuxième élément (20) sont mobiles.

8. Appareil selon une ou plusieurs des revendications précédentes, **caractérisé en ce que** ledit premier élément (22) comprend un corps de battage (21) qui est défini par une seule pièce et qui est pourvu de ladite surface plane et uniforme (23) et **en ce que** lesdits moyens de déplacement sont configurés pour frapper, au moins une fois, la surface plane et uniforme (23) du corps de battement (21) contre ladite première face (2') de la clé (4).

9. Appareil selon une ou plusieurs des revendications précédentes, **caractérisé en ce que** ledit deuxième élément (20) comprend un corps de support (29) sur lequel repose la clé (4), ledit corps de support (29) est défini d'une seule pièce et est munie de ladite surface plane et uniforme (26) sur laquelle repose la face opposée (2") de la tige (3) de ladite clé (4).

10. Appareil selon une ou plusieurs des revendications précédentes, **caractérisé en ce que** lesdits moyens de déplacement pour ledit premier élément (22) et/ou ledit deuxième élément (20) sont configurés pour provoquer une translation des surfaces planes et uniformes respectives (23, 26).) dudit premier élément (22) et/ou dudit deuxième élément (20) selon une direction substantiellement perpendiculaire auxdites surfaces (23, 26).

11. Appareil selon une ou plusieurs des revendications précédentes, **caractérisé en ce que**:
- la surface plane et uniforme (23) du premier élément (22) présente un développement substantiellement horizontal,
- la surface plane et uniforme (26) du deuxième élément (20) présente un développement substantiellement horizontal,
- le deuxième élément (20), sur lequel ladite clé (4) est destinée à s'appuyer, est positionné en dessous par rapport audit premier élément (22),
- ledit premier élément (22) est associé auxdits moyens de déplacement configurés pour provoquer le déplacement de sa surface plane et uniforme (23) de haut en bas.

12. Machine de traitement de clés, de préférence de traitement visant à définir le chiffrement de clé (4), **caractérisée en ce qu'**elle comprend en séquence:
- au moins une unité (41, 42) pour effectuer le processus de cryptage d'une clé (4), ladite unité étant pourvue de moyens pour obtenir au moyen d'une fraise à flûte (6) au moins un creux (5) sur au moins une face (2', 2") de la tige (3) d'une clé (4),
- au moins une unité (43) d'écrasement d'éventuelles bavures (12) dérivant du traitement effectué dans ladite au moins une unité de traitement (41, 42), ladite au moins une unité d'écrasement d'éventuelles bavures (12) étant pourvue en au moins un appareil selon une ou plusieurs des revendications 5-11.

13. Machine selon la revendication précédente, **caractérisée en ce qu'**elle comprend également, en aval de ladite au moins une unité pour effectuer le traitement de découpe d'une clé (4) et ladite unité (43) pour écraser d'éventuelles bavures (12), une unité (44) configurée pour vérifier si les opérations de cryptage et d'écrasement ont été effectuées correctement.

14. Machine selon les revendications 12 ou 13, **caractérisée en ce que** ladite au moins une unité de traitement (41, 42), ladite unité (43) d'écrasement des bavures, ainsi que l'éventuelle unité de contrôle (44), sont côte à côte et **en ce qu'**elle comprend un dispositif de déplacement (50) qui est configuré pour effectuer un transfert linéaire ou rotatif de la clé à traiter entre les unités successives de la machine elle-même.

15. Clé laser (4) ou clé de piste ou clé à poinçon **caractérisée en ce qu'**elle est obtenue par un procédé selon une ou plusieurs des revendications 1 à 4 et au moyen d'un appareil selon une ou plusieurs des revendications 5 à 11 et **en ce qu'**il présente, sur la surface externe (27) des deux faces (2', 2") de la tige (3) de ladite clé (4) et/ou sur les bords (28) de ladite au moins un creux (5, 7) définissant ledit cryptage et obtenu par un procédé réalisé avec une fraise à flûte (6), des portions (60) qui sont définies par l'écrasement des bavures (12) résultantes par ce procès, contre et sur la face correspondante (2', 2") de la tige (3) de cette clé (4).
